# EUROPÄISCHE PATENTANMELDUNG

(11) **EP 1 829 619 A2**
(43) Veröffentlichungstag der Anmeldung: **05.09.2007**
(21) Anmeldenummer: 07002515.0
(22) Anmeldetag: 06.02.2007
(51) Int. Cl.: B05C 11/10

(54) **Pneumatischer Materialdruckregler**

(30) Priorität: 10.02.2006 DE 202006002234 U
(71) Anmelder: Baumer hhs GmbH, 47829 Krefeld (DE)
(72) Erfinder: Jochheim, Markus, 40885 Ratingen (DE); Baldauf, Dr. Dieter, 40885 Ratingen (DE)
(74) Vertreter: Kluin, Jörg-Eden

(57) **Zusammenfassung**

Bei einem Materialdruckregler (100), insbesondere für Klebstoffauftragsgeräte, mit einem Druckgehäuse (1), welches einen Einlass (2) für ein unter Überdruck stehendes fließfähiges Medium und einen Auslass (3) für das fließfähige Medium umfasst, wobei zwischen dem Einlass (2) und dem Auslass (3) ein Reduzierventil gekoppelt ist, mit welchem der Druck des fließfähigen Mediums am Auslass (3) variierbar ist, und mit einer pneumatisch betriebenen Betätigungsanordnung (4) mit einem Drucklufteinlass (12), die mit dem Reduzierventil der art wirkverbunden ist, dass eine Veränderung des pneumatischen Drucks eine Variation des Drucks des fließfähigen Mediums am Auslass (3) bewirkt, sind ein Druckaufnehmer (8), welcher den Druck des fließfähigen Mediums am Auslass (3) erfasst, und eine Regeleinrichtung (13) vorgesehen, die den von dem Druckaufnehmer (8) erfassten Istwert mit einem vorgegebenen Sollwert vergleicht und mittels welcher der pneumatische Druck am Drucklufteinlass (5) in Abhängigkeit des Differenzwertes zwischen Soll- und Istwert regelbar ist.

## Beschreibung

Die Erfindung betrifft einen Materialdruckregler, insbesondere für Klebstoffauf tragsgeräte, mit einem Druckgehäuse, welches einen Einlass für ein unter Überdruck stehendes, fließfähiges Medium und einen Auslass für das fließfähige Medium umfasst, wobei zwischen dem Einlass und dem Auslass ein Reduzierventil angeordnet ist, mit welchem der Druck des fließfähigen Mediums zum Auslass variierbar ist, und mit einer pneumatisch betriebenen Betätigungsanordnung mit einem Drucklufteinlass, die mit dem Reduzierventil derart wirkverbunden ist, dass eine Veränderung des pneumatischen Drucks eine Variation des Drucks des fließfähigen Mediums am Auslass bewirkt.

Ein derartiger Materialdruckregler ist aus der DE 89 04 692.7 U1 bekannt. Er dient dazu, das fließfähige Medium einer Abgabeeinrichtung, beispielsweise einem Leimauftragsventil, unter einem Druck zuzuführen, der einen gleichmäßigen Materialauftrag in der gewünschten Menge pro Zeiteinheit sicherstellt. Hierzu ist der Auslass des Materialdruckreglers mit einem Einlass der Auftragseinrichtung verbunden.

Mittels des Materialdruckreglers wird der an der Auftragseinrichtung anstehende Materialdruck eingestellt, in dem die Druckluft der Betätigungsanordnung unter einem pneumatischen Druck zugeführt wird, der dem gewünschten Materialdruck entspricht. Die Abhängigkeit von pneumatischem Druck zu Materialdruck wird für das jeweilige Material vor der Inbetriebnahme der Auftragseinrichtung durch Versuche bestimmt.

Derartige Materialdruckregler finden insbesondere beim maschinellen Klebstoffauftrag, bei dem der Materialdruck entsprechend der Auftragsgeschwindigkeit und der Viskosität des Klebstoffs geregelt werden muss, vielfach Verwendung. Nachteilig ist jedoch, dass der Materialauftrag nicht immer mit der gewünschten Gleichmäßigkeit erfolgt, da Schwankungen im Materialdruck nicht ausgeschlossen sind. Auch werden mit diesem Materialdruckregler Fehler, z.B. fehlender Klebstöffdruck im Materialeinlass oder eine defekte Leitung nach dem Materialausgang, nicht erkannt.

Der Erfindung liegt daher die Aufgabe zu Grunde, einen gattungsgemäßen Materialdruckregler derart weiterzubilden, dass ein gleichmäßigerer Materialauftrag und eine Fehlererkennung ermöglicht werden.

Diese Aufgabe wird durch den in Anspruch 1 wiedergegebenen Materialdruckregler gelöst.

Der erfindungsgemäße Materialdruckregler umfasst einen Druckaufnehmer, welcher den Druck des fließfähigen Mediums am Auslass erfasst. Ferner ist eine Regeleinrichtung vorgesehen, die den von dem Druckaufnehmer erfassten Istwert mit einem vorgegebenen Sollwert vergleicht und mittels welcher der pneumatische Druck am Drucklufteinlass in Abhängigkeit des Differenzwertes zwischen Soll- und Istwert regelbar ist. Weicht der Istwert des Materialdrucks vom Sollwert ab, so erfolgt mittels der Regeleinrichtung eine Veränderung des pneumatischen Drucks im Sinne einer Angleichung des Materialdrucks an den Sollwert. Liegt der Istwert beispielsweise unter dem Sollwert, was durch Reibung von Dichtungselementen der Fall sein kann, so wird der pneumatische Druck mittels der Regeleinrichtung solange variiert, bis Ist- und Sollwert innerhalb eines vorgegebenen, zulässigen Abweichungsbereichs liegen.

Ferner ist es möglich, den erfindungsgemäßen Materialdruckregler derart auszugestalten, dass für den Fall, dass Differenzen zwischen Soll- und Istwert einer Größe erfasst werden, die auf einen Vorrichtungsdefekt schließen lassen, das Reduzierventil zur Unterbrechung der Materialabgabe vollständig zu schließen und diesen Zustand durch optische und/oder akustische Signale anzuzeigen. Die Menge an Ausschuss, die beispielsweise beim maschinellen Klebstoffauftrag im Falle eines Defekts produziert wird, kann durch diese Maßnahme reduziert werden.

Der Druckaufnehmer kann in beliebiger, beispielsweise in mechanisch mit der Regeleinrichtung zusammenwirkender Weise ausgestaltet sein.

Besonders bevorzugt ist es jedoch, den Druckaufnehmer als Drucksensor auszubilden, der den erfassten Druckwert in ein elektrisches Signal umsetzt.
Die Regeleinrichtung umfasst dann vorzugsweise eine Regelelektronik, an die der Drucksensor angeschlossen ist. In der Regelelektronik sind ferner die für die Regelung erforderlichen Parameter wie Sollwert, zulässiger Differenzwert zwischen Soll- und Istwert gespeichert und es wird der Differenzwert zwischen Soll- und Istwert ermittelt.

Die Regelelektronik weist dann vorzugsweise einen Ausgang auf, an dem ein von dem Differenzwert abhängiges elektrisches Signal erzeugt wird und welcher mit einer Druckluft-Regeleinheit verbunden ist.

Die Regeleinheit kann - wie besonders bevorzugt - mindestens ein mit einer Druckluftquelle verbundenes Belüftungsventil und mindestens ein Entlüftungsventil umfassen. Ist der Istwert des Materialdrucks niedriger als der Sollwert, so wird mittels der Regelelektronik das Belüftungsventil getaktet oder kontinuierlich solange geöffnet, bis der gewünschte Materialdruck mit dem Druckaufnehmer erfasst wird. Ist der erfasste Istwert des Materialdrucks niedriger als der Sollwert, so wird mittels der Regelelektronik das Entlüftungsventil getaktet oder kontinuierlich solange betätigt, bis wiederum der Druckaufnehmer den gewünschten Materialdruck erfasst.

In der Zeichnung ist ein Ausführungsbeispiel eines erfindungsgemäßen Materialdruckreglers dargestellt.

Es zeigen:

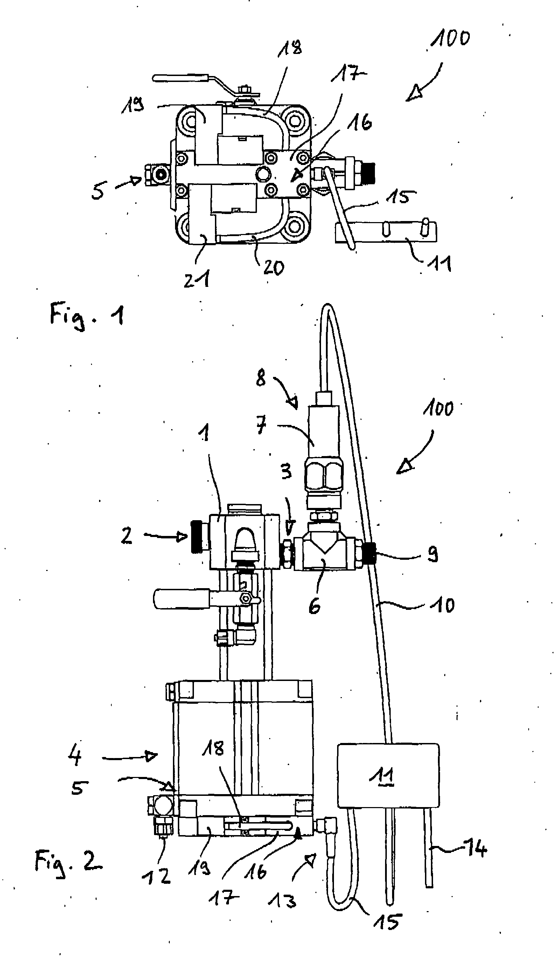

- Fig.1: den Materiaidruckregler in einer Ansicht gemäß Fig. 2 von unten sowie
- Fig. 2: denselben Materialdruckregler in einer Ansicht gemäß Fig. 2 von oben.

Der als Ganzes mit 100 bezeichnete Materialdruckregier umfasst ein Driackgehäuse 1, welches einen Einlass 2 für ein unter Überdruck stehendes fließfähiges Medium und einen Auslass 3 für das fließfähige Medium umfasst. Zwischen dem Einlass 2 und dem Auslass 3 ist ein in der Zeichnung nicht erkennbares Reduzierventil in einer an sich aus der DE 89 04 692.7 U1 bekannten Weise gekoppelt, mit welchem der Druck des fließfähigen Mediums am Auslass 3 variierbar ist.

Ferner umfasst der Materialdruckregler 100 eine einen Drucklufteinlass 5 umfassende, pneumatisch betriebene Betätigungsanordnung 4, die mit dem Reduzierventil in einer aus der DE 89 04 692.7 U1 bekannten Weise derart wirkverbunden ist, dass eine Veränderung des pneumatischen Drucks eine Variation des Drucks des fließfähigen Mediums am Auslass 3 bewirkt.

Über ein T-Stück 6 ist ein als elektrischer Drucksensor 7 ausgebildeter Druckaufnehmer 8 mit dem Auslass 3 verbunden. Mittels des Druckaufnehmers 8 wird der Materialdruck erfasst, welcher in der zu einer in der Zeichnung nicht dargestellten Abgabeeinrichtung führenden Leitung 9 herrscht.

Der Drucksensor 7 ist über eine elektrische Leitung 10 an die Regelelektronik 11 einer Regeleinrichtung 12 angeschlossen, mittels welcher der pneumatische Druck an dem Drucklufteinlass 5 variierbar ist. Hierzu wird der der Regelelektronik 11 über eine Datenleitung 14 zugeleitete Sollwert mit dem Istwert des Materialdrucks verglichen und ein den Differenzwert charakterisierendes Regelsignal erzeugt.

Das Regelsignal wird über eine Regelleitung 15 einer Druckluft-Regeleinheit 16 zugeführt.

Die Druckluft-Regeleinheit 16 umfasst eine elektrische Betätigungseinrichtung 17, die über eine elektrische Betätigungsleitung 18 mit einem elektrischen Entlüftungsventil 19 und über eine elektrische Betätigungsleitung 20 mit einem Belüftungsventil 21 verbunden ist.

Die Ent- und Belüftungventile 19, 21 werden mittels der elektrischen Betätigungseinrichtung 17 in der folgenden Weise betätigt:
- Signalisiert die Regelelektronik 11 über die Regelleitung 15, dass der mittels des Drucksensors 7 erfasste Druck niedriger als der Sollwert ist, so wird das Belüftungsventil 21 solange geöffnet und damit die Verbindung zwischen dem Drucklufteinlass 5 und einer Druckluftzuleitung 12 hergestellt, bis sich der pneumatische Druck in der Betätigungsanordnung auf einen Wert erhöht hat, der einen Materialdruck am Auslass 3 erzeugt, der innerhalb eines vorgegebenen Abweichungsbereichs vom Sollwert liegt.
- Ist der mittels des Drucksensors 7 erfasste Materialdruck höher als der Sollwert, so wird mittels der elektrischen Betätigungseinrichtung 17 das Entlüftungsventil 19 solange geöffnet, bis der pneumatische Druck sich soweit abgebaut hat, dass der Materialdruck am Auslass 3 innerhalb des Sollwertbereichs liegt.

### Bezugszeichenliste:

- 100: Materialdruckregler
- 1: Druckgehäuse
- 2: Einlass
- 3: Auslass
- 4: Betätigungsanordnung
- 5: Drucklufteinlass
- 6: T-Stück
- 7: Drucksensor
- 8: Druckaufnehmer
- 9: Leitung
- 10: Leitung
- 11: Regelelektronik
- 12: Druckluftzuleitung
- 13: Regeleinrichtung
- 14: Datenleitung
- 15: Regelleitung
- 16: Druckluft-Regeleinheit
- 17: Elektrische Betätigungseinrichtung
- 18: Elektrische Betätigungsleitung
- 19: Elektrisches Entlüftungsventil
- 20: Elektrische Betätigungsieitung
- 21: Elektrisches Belüftungsventil

## Patentansprüche

1. Materialdruckregler (100), insbesondere für Klebstoffauftragsgeräte,
mit einem Druckgehäuse (1), welches einen Einlass (2) für ein unter Überdruck stehendes fließfähiges Medium und einen Auslass (3) für das fließfähige Medium umfasst, wobei zwischen dem Einlass (2) und dem Auslass (3) ein Reduzierventil gekoppelt ist, mit welchem der Druck des fließfähigen Mediums am Auslass (3) variierbar ist,
und mit einer pneumatisch betriebenen Betätigungsanordnung (4) mit einem Drucklufteinlass (12), die mit dem Reduzierventil derart wirkverbunden ist, dass eine Veränderung des pneumatischen Drucks eine Variation des Drucks des fließfähigen Mediums am Auslass (3) bewirkt,
**dadurch gekennzeichnet,**
**dass** ein Druckaufnehmer (8) vorgesehen ist, welcher den Druck des fließfähigen Mediums am Auslass (3) erfasst, und
**dass** eine Regeleinrichtung (13) vorgesehen ist, die den von dem Druckaufnehmer (8) erfassten Istwert mit einem vorgegebenen Sollwert vergleicht und mittels welcher der pneumatische Druck am Drucklufteinlass (5) in Abhängigkeit des Differenzwertes zwischen Soll- und Istwert regelbar ist.

2. Materialdruckregler nach Anspruch 1,
**dadurch gekennzeichnet,**
**dass** der Druckaufnehmer (8) ein Drucksensor (7) ist, der den erfassten Druckwert in ein elektrisches Signal umsetzt.

3. Materialdruckregler nach Anspruch 2,
**dadurch gekennzeichnet,**
**dass** die Regeleinrichtung (13) eine Regelelektronik (12) umfasst, an die der Drucksensor (7) angeschlossen ist, in der der Sollwert gespeichert ist und die den Differenzwert zwischen Soll- und Istwert ermittelt.

4. Materialdruckregler nach Anspruch 3,
**dadurch gekennzeichnet,**
**dass** die Regelelektronik (11) einen Ausgang umfasst, an dem ein von dem Differenzwert abhängiges elektrisches Signal erzeugt wird und welcher mit einer Druckiuft-Regeieinheit (16) verbunden ist.

5. Materialdruckregler nach Anspruch 4,
**dadurch gekennzeichnet,**
**dass** die Druckluft-Regeleinheit (16) mindestens ein mit einer Druckluftquelle verbundenes Belüftungsventil (21) und mindestens ein Entlüftungsventil (19) umfasst.
